# EUROPEAN PATENT APPLICATION

(11) **EP 2 677 204 A1**
(43) Date of publication of application: **25.12.2013**
(21) Application number: 13173196.0
(22) Date of filing: 21.06.2013
(51) Int. Cl.: F16H 55/30

(54) **Chainwheel enabling positive rotational transmission and reverse rotational sliding features**

(30) Priority: 21.06.2012 US 201213529105
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

The present invention aims at a chain and chainwheel set capable of positive rotational transmission and reverse rotational sliding, in which a novel positive rotational transmission forced recessed face at chain tooth root portion (104) is formed, and a reverse rotational forced sliding chain tooth face (114) capable of sliding is formed while a reverse rotational chain tooth face being coupled with the chain, so when the chain drives the chainwheel in the positive rotational direction, a chain roller (110) sleeved on a chain connecting pivot shaft (109) is tightly engaged at the forced recessed face at chain tooth root portion for transmitting rotational kinetic power, when the chainwheel is driven in the reverse rotational direction, a sliding state is generated between the reverse rotational forced sliding chain tooth face (114) and the chain (106).

## Description

### BACKGROUND OF THE INVENTION

### (a) Field of the Invention

The present invention aims at a chain and chainwheel set capable of positive rotational transmission and reverse rotational sliding, in which a novel positive rotational transmission forced recessed face at chain tooth root portion (104) is formed, and a reverse rotational forced sliding chain tooth face (114) capable of sliding is formed while a reverse rotational chain tooth face being coupled with the chain, so when the chain drives the chainwheel in the positive rotational direction, a chain roller (110) sleeved on a chain connecting pivot shaft (109) is tightly engaged at the forced recessed face at chain tooth root portion for transmitting rotational kinetic power, when the chainwheel is driven in the reverse rotational direction, a sliding state is generated between the reverse rotational forced sliding chain tooth face (114) and the chain (106); the chainwheel enabling positive rotational transmission and reverse rotational sliding features includes a structure composed of right circular, eccentric circular and oval gear plates, and can be further applied to adjust the phase angle relationship between the active wheel and the passive wheel.

### (b) Description of the Prior Art

A conventional chainwheel is often utilized for bidirectional forced transmission, and gear teeth are formed in a symmetrical structure; for smoothly guiding the chain into the chainwheel, a symmetrical chevron angled tooth face (103) having a tooth peak (105) at outer side and a wider chain tooth root portion at inner side has to be formed between the tooth shape and the chain roller (110) sleeved on a chain connecting pivot shaft (109) installed between lateral connecting sheets at each segment of the chain; however, the mentioned chain tooth is not able to be used for unidirectional transmission or served to adjust the phase angle relation between the active wheel and the passive wheel.

### SUMMARY OF THE INVENTION

The present invention aims at a chain and chainwheel set capable of positive rotational transmission and reverse rotational sliding, in which a novel positive rotational transmission forced recessed face at chain tooth root portion (104) is formed, and a reverse rotational forced sliding chain tooth face (114) capable of sliding is formed while a reverse rotational chain tooth face being coupled with the chain, so when the chain drives the chainwheel in the positive rotational direction, a chain roller (110) sleeved on a chain connecting pivot shaft (109) is tightly engaged at the forced recessed face at chain tooth root portion for transmitting rotational kinetic power, when the chainwheel is driven in the reverse rotational direction, a sliding state is generated between the reverse rotational forced sliding chain tooth face (114) and the chain (106).

According to a second aspect of the present invention, a chainwheel comprises a plurality of teeth, each tooth extending from a tooth root portion to a tooth peak (105) and having a pair of tooth faces (103); wherein on each of the plurality of teeth, one of the tooth faces (103) at the same side of force bearing with the chain includes a recess (104) for engagement with a chain roller in forward rotational direction, and the other tooth face (103) has a reverse angle to permit a chain roller to slide over the teeth in reverse rotational direction.

### BRIEF DESCRIPTION OF THE DRAWINGS

FIG. 1 is a schematic structural view showing the chain tooth of a conventional chainwheel.
FIG. 2 is a side view showing a conventional chain structure.
FIG. 3 is a front view showing the conventional chain structure.
FIG. 4 is a schematic structural view illustrating the tooth shape of the chainwheel enabling positive rotational transmission and reverse rotational sliding features composed of a right circular gear plate and having a positive rotational transmission forced recessed face at chain tooth root portion (104) and a reverse rotational forced chain tooth face formed as a forced sliding oblique face, according to the present invention.
FIG. 5 is a schematic structural view illustrating the tooth shape of the chainwheel enabling positive rotational transmission and reverse rotational sliding features composed of an eccentric circular gear plate and having a positive rotational transmission forced recessed face at chain tooth root portion (104) and a reverse rotational forced chain tooth face formed as a forced sliding oblique face, according to the present invention.
FIG. 6 is a schematic structural view illustrating the tooth shape of the chainwheel enabling positive rotational transmission and reverse rotational sliding features composed of an oval gear plate and having a positive rotational transmission forced recessed face at chain tooth root portion (104) and a reverse rotational forced chain tooth face formed as a forced sliding oblique face, according to the present invention.

### DESCRIPTION OF MAIN COMPONENT SYMBOLS

101 : Right circular gear plate
102 : Rotational transmission coupling interface
103 : Symmetrical chevron angled tooth face
104 : Positive rotational transmission forced recessed face at chain tooth root portion
105 : Tooth peak
106 : Chain
107 : Eccentric circular gear plate
108 : Oval gear plate
109 : Chain connecting pivot shaft
110 : Chain roller
114 : Reverse rotational forced sliding chain tooth face

### DETAILED DESCRIPTION OF THE PREFERRED EMBODIMENTS

A conventional chainwheel is often utilized for bidirectional forced transmission, and gear teeth are formed in a symmetrical structure; for smoothly guiding the chain into the chainwheel, a symmetrical chevron angled tooth face (103) having a tooth peak (105) at outer side and a wider chain tooth root portion at inner side has to be formed between the tooth shape and the chain roller (110) sleeved on a chain connecting pivot shaft (109) installed between lateral connecting sheets at each segment of the chain; however, the mentioned chain tooth is not able to be used for unidirectional transmission or served to adjust the phase angle relation between the active wheel and the passive wheel.

The present invention aims at a chain and chainwheel set capable of positive rotational transmission and reverse rotational sliding, in which a novel positive rotational transmission forced recessed face at chain tooth root portion (104) is formed, and a reverse rotational forced sliding chain tooth face (114) capable of sliding is formed while a reverse rotational chain tooth face being coupled with the chain, so when the chain drives the chainwheel in the positive rotational direction, a chain roller (110) sleeved on a chain connecting pivot shaft (109) is tightly engaged at the forced recessed face at chain tooth root portion for transmitting rotational kinetic power, when the chainwheel is driven in the reverse rotational direction, a sliding state is generated between the reverse rotational forced sliding chain tooth face (114) and the chain (106); the chainwheel enabling positive rotational transmission and reverse rotational sliding features includes a structure composed of right circular, eccentric circular and oval gear plates, and can be further applied to adjust the phase angle relationship between the active wheel and the passive wheel, illustrated as followings:

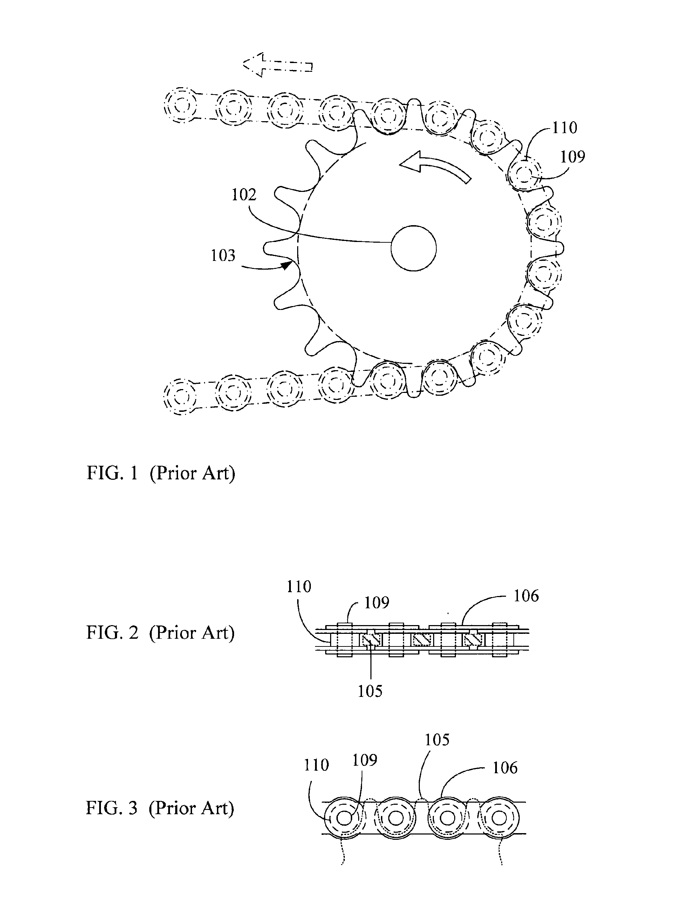

FIG. 1 is a schematic structural view showing the chain tooth of a conventional chainwheel;
FIG. 2 is a side view showing a conventional chain structure;
FIG. 3 is a front view showing the conventional chain structure;
As shown in FIG. 1, FIG. 2 and FIG. 3, during transmission, for smoothly guiding the chain into the chainwheel through the chain tooth at the outer periphery of a conventional chainwheel, a symmetrical chevron angled tooth face (103) having a tooth peak (105) at outer side and a wider chain tooth root portion at inner side has to be formed between the tooth shape and the chain roller (110) sleeved on a chain connecting pivot shaft (109) installed between lateral connecting sheets at each segment of the chain; however, the mentioned chain tooth is not able to be used for unidirectional transmission or served to adjust the phase angle relation between the active wheel and the passive wheel.
For improving the mentioned shortage, the present invention provides a novel chainwheel enabling positive rotational transmission and reverse rotational sliding features;

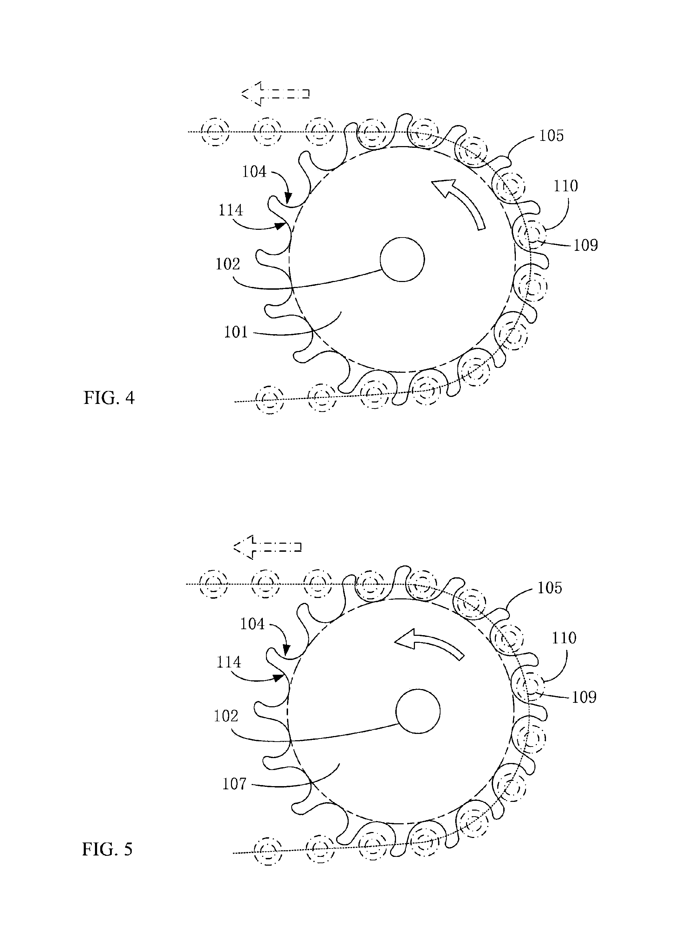

FIG. 4 is a schematic structural view illustrating the tooth shape of the chainwheel enabling positive rotational transmission and reverse rotational sliding features composed of a right circular gear plate and having a positive rotational transmission forced recessed face at chain tooth root portion (104) and a reverse rotational forced chain tooth face formed as a forced sliding oblique face, according to the present invention;

As shown in FIG. 4, it mainly consists of:
- -right circular gear plate (101): the periphery thereof is formed with gear teeth, the center thereof is formed with a mechanism in an aperture or shaft shape or a chainwheel teeth having its outer circumference served for transmission for performing right circular rotation thereby forming a rotational transmission coupling interface (102), one main characteristic thereof is that a root is formed along the tooth peak (105) of chainwheel tooth and inwardly recessed as a chevron angled face, wherein one root portion on the face along the transmission forcing is formed with a positive rotational transmission forced recessed face at chain tooth root portion (104), thereby coupling the chain roller (110) sleeved on the chain connecting pivot shaft (109) to be tightly engaged on the positive rotational transmission forced recessed face at chain tooth root portion (104); when the reverse rotational chain tooth face is coupled with the chain, a reverse rotational forced sliding chain tooth face (114) is formed, so when the chain drives the chainwheel in the positive rotational direction, the chain roller (110) sleeved on the chain connecting pivot shaft (109) is tightly engaged on the positive rotational transmission forced recessed face at chain tooth root portion (104) for transmitting rotational kinetic power; when driving the chainwheel in the reverse rotational direction, a sliding state is generated between the reverse rotational forced sliding chain tooth face (114) and the chain (106).

FIG. 5 is a schematic structural view illustrating the tooth shape of the chainwheel enabling positive rotational transmission and reverse rotational sliding features composed of an eccentric circular gear plate and having a positive rotational transmission forced recessed face at chain tooth root portion (104) and a reverse rotational forced chain tooth face formed as a forced sliding oblique face, according to the present invention;

As shown in FIG. 5, it mainly consists of:
- eccentric circular gear plate (107): the periphery thereof is formed with gear teeth, the center thereof is formed with a mechanism in an aperture or shaft shape or chainwheel teeth having its outer circumference for transmission for performing eccentric circular rotation thereby forming a rotational transmission coupling interface (102), one main characteristic thereof is that a root is formed along the tooth peak (105) of chainwheel tooth and inwardly recessed as a chevron angled face, wherein one root portion on the face along the transmission forcing is formed with a positive rotational transmission forced recessed face at chain tooth root portion (104), thereby coupling the chain roller (110) sleeved on the chain connecting pivot shaft (109) to be tightly engaged on the positive rotational transmission forced recessed face at chain tooth root portion (104); when the reverse rotational chain tooth face is coupled with the chain, a reverse rotational forced sliding chain tooth face (114) is formed, so when the chain drives the chainwheel in the positive rotational direction, the chain roller (110) sleeved on the chain connecting pivot shaft (109) is tightly engaged on the positive rotational transmission forced recessed face at chain tooth root portion (104) for transmitting rotational kinetic power; when driving the chainwheel in the reverse rotational direction, a sliding state is generated between the reverse rotational forced sliding chain tooth face (114) and the chain (106).

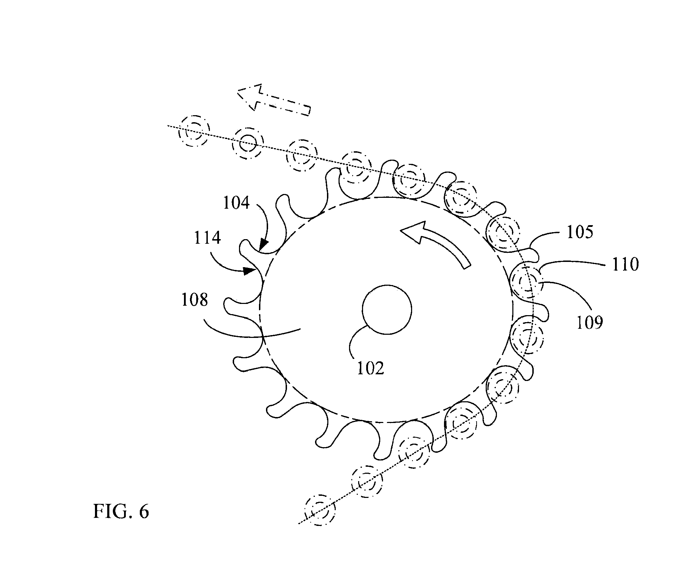

FIG. 6 is a schematic structural view illustrating the tooth shape of the chainwheel enabling positive rotational transmission and reverse rotational sliding features composed of an oval gear plate and having a positive rotational transmission forced recessed face at chain tooth root portion (104) and a reverse rotational forced chain tooth face formed as a forced sliding oblique face, according to the present invention;

As shown in FIG. 6, it mainly consists of:
- -oval gear plate (108): the periphery thereof is formed with gear teeth, the center thereof is formed with a mechanism in an aperture or shaft shape or chainwheel teeth having its outer circumference for transmission for performing oval rotation thereby forming a rotational transmission coupling interface (102), one main characteristic thereof is that a root is formed along the tooth peak (105) of chainwheel tooth and inwardly recessed as a chevron angled face, wherein one root portion on the face along the transmission forcing is formed with a positive rotational transmission forced recessed face at chain tooth root portion (104), thereby coupling the chain roller (110) sleeved on the chain connecting pivot shaft (109) to be tightly engaged on the positive rotational transmission forced recessed face at chain tooth root portion (104); when the reverse rotational chain tooth face is coupled with the chain, a reverse rotational forced sliding chain tooth face (114) is formed, so when the chain drives the chainwheel in the positive rotational direction, the chain roller (110) sleeved on the chain connecting pivot shaft (109) is tightly engaged on the positive rotational transmission forced recessed face at chain tooth root portion (104) for transmitting rotational kinetic power; when driving the chainwheel in the reverse rotational direction, a sliding state is generated between the reverse rotational forced sliding chain tooth face (114) and the chain (106).

According to the chainwheel enabling positive rotational transmission and reverse rotational sliding features, an idle wheel having expanding or retracting force can be optionally adopted.

## Claims

1. A chainwheel enabling positive rotational transmission and reverse rotational sliding features, in which a novel positive rotational transmission forced recessed face at chain tooth root portion (104) is formed, and a reverse rotational forced sliding chain tooth face (114) capable of sliding is formed while a reverse rotational chain tooth face being coupled with the chain, so when the chain drives the chainwheel in the positive rotational direction, a chain roller (110) sleeved on a chain connecting pivot shaft (109) is tightly engaged at the forced recessed face at chain tooth root portion for transmitting rotational kinetic power, when the chainwheel is driven in the reverse rotational direction, a sliding state is generated between the reverse rotational forced sliding chain tooth face (114) and the chain (106).

2. A chainwheel enabling positive rotational transmission and reverse rotational sliding features as claimed in claim 1, wherein it further includes to be constituted by a right circular gear plate (101), and it mainly consists of:
- -right circular gear plate (101): the periphery thereof is formed with gear teeth, the center thereof is formed with a mechanism in an aperture or shaft shape or a chainwheel teeth having its outer circumference served for transmission for performing right circular rotation thereby forming a rotational transmission coupling interface (102), one main characteristic thereof is that a root is formed along the tooth peak (105) of chainwheel tooth and inwardly recessed as a chevron angled face, wherein one root portion on the face along the transmission forcing is formed with a positive rotational transmission forced recessed face at chain tooth root portion (104), thereby coupling the chain roller (110) sleeved on the chain connecting pivot shaft (109) to be tightly engaged on the positive rotational transmission forced recessed face at chain tooth root portion (104); when the reverse rotational chain tooth face is coupled with the chain, a reverse rotational forced sliding chain tooth face (114) is formed, so when the chain drives the chainwheel in the positive rotational direction, the chain roller (110) sleeved on the chain connecting pivot shaft (109) is tightly engaged on the positive rotational transmission forced recessed face at chain tooth root portion (104) for transmitting rotational kinetic power; when driving the chainwheel in the reverse rotational direction, a sliding state is generated between the reverse rotational forced sliding chain tooth face (114) and the chain (106).

3. A chainwheel enabling positive rotational transmission and reverse rotational sliding features as claimed in claim 1, wherein it further includes to be constituted by a eccentric circular gear plate (107), and it mainly consists of:
- - eccentric circular gear plate (107): the periphery thereof is formed with gear teeth, the center thereof is formed with a mechanism in an aperture or shaft shape or chainwheel teeth having its outer circumference for transmission for performing eccentric circular rotation thereby forming a rotational transmission coupling interface (102), one main characteristic thereof is that a root is formed along the tooth peak (105) of chainwheel tooth and inwardly recessed as a chevron angled face, wherein one root portion on the face along the transmission forcing is formed with a positive rotational transmission forced recessed face at chain tooth root portion (104), thereby coupling the chain roller (110) sleeved on the chain connecting pivot shaft (109) to be tightly engaged on the positive rotational transmission forced recessed face at chain tooth root portion (104); when the reverse rotational chain tooth face is coupled with the chain, a reverse rotational forced sliding chain tooth face (114) is formed, so when the chain drives the chainwheel in the positive rotational direction, the chain roller (110) sleeved on the chain connecting pivot shaft (109) is tightly engaged on the positive rotational transmission forced recessed face at chain tooth root portion (104) for transmitting rotational kinetic power; when driving the chainwheel in the reverse rotational direction, a sliding state is generated between the reverse rotational forced sliding chain tooth face (114) and the chain (106).

4. A chainwheel enabling positive rotational transmission and reverse rotational sliding features as claimed in claim 1, wherein it further includes to be constituted by a oval gear plate (108) and it mainly consists of:
- -oval gear plate (108): the periphery thereof is formed with gear teeth, the center thereof is formed with a mechanism in an aperture or shaft shape or chainwheel teeth having its outer circumference for transmission for performing oval rotation thereby forming a rotational transmission coupling interface (102), one main characteristic thereof is that a root is formed along the tooth peak (105) of chainwheel tooth and inwardly recessed as a chevron angled face, wherein one root portion on the face along the transmission forcing is formed with a positive rotational transmission forced recessed face at chain tooth root portion (104), thereby coupling the chain roller (110) sleeved on the chain connecting pivot shaft (109) to be tightly engaged on the positive rotational transmission forced recessed face at chain tooth root portion (104); when the reverse rotational chain tooth face is coupled with the chain, a reverse rotational forced sliding chain tooth face (114) is formed, so when the chain drives the chainwheel in the positive rotational direction, the chain roller (110) sleeved on the chain connecting pivot shaft (109) is tightly engaged on the positive rotational transmission forced recessed face at chain tooth root portion (104) for transmitting rotational kinetic power; when driving the chainwheel in the reverse rotational direction, a sliding state is generated between the reverse rotational forced sliding chain tooth face (114) and the chain (106).
